# EUROPEAN PATENT SPECIFICATION

(11) **EP 1 797 021 B1**
(45) Date of publication and mention of the grant of the patent: **03.12.2008**
(21) Application number: 05782778.4
(22) Date of filing: 13.09.2005
(51) Int. Cl.: C07B 57/00, C07C 317/24

(54) **METHODS FOR THE SEPARATION OF MODAFINIL**
VERFAHREN ZUR ABTRENNUNG VON MODAFINIL
PROCEDE DE SEPARATION DE MODAFINIL

(30) Priority: 13.09.2004 EP 04292199; 20.09.2004 US 611511 P; 12.09.2005 US 224250
(43) Date of publication of application: 20.06.2007
(73) Proprietor: CEPHALON, INC., Frazer, PA 19355 (US)
(72) Inventor: HAUCK, Wilhelm, WALLLINGFORD, PA 19086 (US); LUDEMANN-HOMBOURGER, Olivier, F-54340 POMPEY (FR); RULAND, Y. Novasep Asia/Applexion-Orelis-Novasep, 200030 Shanghai (CN); LANDMESSER, Nelson, EXTON, PA 19341 (US); MALLAMO, John, GLENMOORE, PA 19343 (US)
(74) Representative: Hallybone, Huw George
(86) International application number: PCT/IB2005/002706
(87) International publication number: WO 2006/030278

(56) References cited:
- US-A- 4 927 855

## Description

### BACKGROUND OF THE INVENTION

This invention relates to chromatographic processes for obtaining optically active modafinil compounds, including the levorotatory enantiomer, (-)-benzhydrilsulfinylacetamide ("armodafinil"), and the dextrorotatory enantiomer, (+)-benzhydrilsulfinylacetamide. Such processes include commercially viable methods for producing armodafinil on an industrial scale suitable for pharmaceutical use. Racemic modafinil is the active agent in the pharmaceutical product Provigil^{®}, which has been approved by the United States Food and Drug Administration for use in the treatment of excessive daytime sleepiness associated with narcolepsy, and to improve wakefulness in patients with excessive sleepiness associated with obstructive sleep apnea/hypopnea syndrome and shift work sleep disorder.

The levorotatory isomer of modafinil and processes for its preparation have been described in U.S. Pat. No. 4,927,855 ("the '855 patent").

The '855 patent details the preparation of the levorotatory isomer by achiral synthesis. This process is not sufficiently robust to produce armodafinil on an industrial scale in pharmaceutically acceptable purities. It would be of significant advantage to obtain armodafinil in large quantities that meet acceptable pharmaceutical standards.

A variety of methods have been utilized to obtain compounds in stereochemically pure form. Stereoisomers can be synthesized using asymmetric synthetic techniques, however such syntheses often require expensive reagents. Alternatively, stereoisomers can be obtained by selective recrystallization of one stereoisomer, however such a process cannot be used for all compounds, and may not be useful for enantiomeric separations. In addition, the process is considered inefficient, in that product recovery is often low and purity uncertain. Stereoisomers can also be resolved chromatographically, although the large amount of solvent required for conventional batch chromatography is cost prohibitive and results in the preparation of relatively dilute products. Limited throughput volumes also often make batch chromatography impractical for large-scale production. Moreover, the number of technical parameters required for its applicability on an industrial scale makes it difficult to select appropriate conditions for the mass production of pharmaceutically viable amounts of an enantiomeric compound. Determination of the conditions necessary for productive separation of enantiomers has been found by those of ordinary skill in the art to be a matter of trial and error. Even so, it is a common for those skilled in the art to find chiral separation of certain chiral mixtures to be inefficient or ineffective. In the instant case, these problems are heightened by the relative difficulty in solubilizing modafinil in many common solvents. The object of the present invention is to provide an efficient process for the separation of the modafinil enantiomers from racemic modafinil that provides a viable combination of selectivity and resolution at high throughput volumes or in bulk amounts.

Hence, the present invention is directed to producing optically pure armodafinil at relatively low cost and with optimized productivity on a commercially viable scale. It has been found that multi-column continuous chromatography processes are capable of providing large scale, industrial enantiomeric separation of racemic modafinil, and in particular for the preparation of armodafinil. In particular, the necessary operational parameters have been found to yield an excellent degree of separation of the stereoisomers of modafinil with sufficiently robust productivity on a large scale. These multicolumn continuous chromatographic processes overcome certain limitations in classical batch chromatography, such as having increased productivity, lower eluent composition and higher robustness, resulting in lower final purification costs.

### SUMMARY OF THE INVENTION

The present invention provides an improved process for the isolation of the enantiomeric forms of modafinil with high enantiomeric purity and high overall yields. Thus the present invention provides processes for obtaining an enantiomer of modafinil, and in particular, the levorotatory isomer of modafinil, by forming a solution of racemic modafinil and separating the enantiomers of modafinil by means of a continuous chromatographic process. The continuous chromatographic process includes, but is not limited to a countercurrent chromatographic process, such as a simulated moving bed ("SMB") process, or a non-steady state system, such as the Varicol^{™} process, which uses at least two columns packed with an optical resolution packing material from the amylosic or cellulosic class of polysaccharides or chemically modified forms thereof.

In an additional embodiment of the present invention, there is provided a method for chromatographically resolving at least one enantiomer (preferably armodafinil) from a racemic mixture of modafinil using multicolumn continuous chromatography, wherein the continuous chromatographic method comprises a liquid mobile phase comprising a least one solvent and a solid chiral stationary phase comprising a derivatized polysaccharide that is selected from the amylosic, cellulosic, chitosan, xylan, curdlan, dextran, and inulan class of polysaccharides.

### DETAILED DESCRIPTION

The processes of the present invention can utilize any chromatographic method for separating racemic modafinil to produce optically pure armodafinil. Such methods include, but are not limited to, traditional single column batch chromatography, continuous chromatography, or a steady state, sequential injection process (as described in, for example, U.S. Pat. No. 5,630,943 and PCT Publ. No. WO 98/51391). Continuous chromatographic methods include, but are not limited to multicolumn continuous chromatographic processes, including such countercurrent chromatographic processes as SMB, or a non-steady state continuous chromatographic method known as the "Varicol^{™}" process.

The SMB process is a continuous system that simulates counter-current flows to perform the chromatographic separation. The separation is achieved using a set of fixed-bed columns packed with a solid stationary phase; ports for the continuous introduction of solvent desorbent (mobile phase) and feed; ports for the continuous removal of raffinate (solution containing the less strongly retained enantiomer) and extract (solution containing the more strongly retained enantiomer); and a means of recycling fluid through the system, if necessary. In a closed loop system, the columns are connected such that the outlet of each column is connected to the inlet of the next column also with the outlet of the last column being connected to the inlet of the first column. Other implementations of the SMB process include an open loop system which can include 4-zone systems with external recycling or other 3-zone systems. All the inlet and outlet ports are shifted substantially simultaneously at substantially fixed time intervals in the fluid flow direction to simulate counter-current flow between the liquid phase and the solid phase. For the separation of stereoisomers, a chiral stationary phase ("CSP") capable of chiral recognition is often employed.

The Varicol^{™} process is a non-steady state continuous separation process and is more fully described in U.S. Pat. No. 6,136,198, as well as in U.S. Pat. Nos. 6,375,839; 6,413,419; and 6,712,973.

This non-steady state process differs from the SMB process in that the inlet and outlet ports are not all shifted at the same time. The column distribution between zones does not stay the same during the period because the lines are shifted at different times, so the column allocation differs accordingly. In this process, there is no limitation on the number of configurations for a given number of columns, thereby giving the non-steady state process a greater degree of flexibility as compared to the SMB process. The potential for variation of the average length of given zones represented by column sections during the chromatographic separation can lead to an increase efficiency by using less columns, reducing the amount of the solid phase and solvent(s), and increasing higher purity yields.

In one aspect of the present invention, a five to six column-four variable zone Varicol^{™} system may be used. The zones vary in length during operation, and have an average rather than fixed length in a given operation cycle. In another aspect, a three column-four variable zone Varicol^{™} system is used, a system which cannot be utilized in a SMB process, as at least four columns with four zones are necessary to simulate the true moving bed system. For the SMB process, the minimal number of columns required for the separation is equal to the number of zones of the system, whereas the number of columns can be smaller than the number of zones in the Varicol^{™} system

In another aspect of the present invention the chiral stationary phase is derivatized with at least one sugar derivative, and in particular is a derivatized polysaccharide that is selected from the amylosic, cellulosic, chitosan, xylan, curdlan, dextran, and inulan class of polysaccharides. In certain embodiments, the chiral stationary phase is a member of the amylosic or cellulosic class of polysaccharides. Esters and carbamates of these materials in particular are suitable. In additional embodiments, the chiral stationary phase is selected from cellulose phenyl carbamate derivatives, such as cellulose tris (3,5-dimethylphenyl) carbamate (available from Daicel Chemical Industries, Ltd. as "Chiralcel OD"); cellulose tribenzoate derivatives, such as cellulose tris 4-methylbenzoate (available from Daicel Chemical Industries, Ltd. as "Chiralcel OJ"); cellulose tricinnamate (available from Daicel Chemical Industries, Ltd. as "Chiralcel OK"); amylose phenyl and benzyl carbamate derivatives, such as amylose tris [(S)-α-methyl benzylcarbamate] (available from Daicel Chemical Industries, Ltd. as "Chiralpak AS"), amylose tris (3,5-dimethylphenyl) carbamate (available from Daicel Chemical Industries, Ltd. as "Chiralpak AD", or as "Chiralpak IA", wherein the carbamate derivative is bonded to the amylosic backbone), amylose 3,4-substituted phenyl carbamate, and amylose 4-substituted phenyl-carbamate; and amylose tricinnamate.

Typically, the polysaccharide derivative is bonded or coated on silica gel, zirconium, alumina, ceramics and other silicas, and preferably on silica gel. Although the average particle diameter of the packing material varies depending on the volume flow rate of the solvent flowing in the chromatographic system, it is usually 1 to 300 µm, preferably 2 to 100 µm, more preferably 5 to 75 µm and most preferably 10 to 30 µm. As is known in the art, the selection of the average particle diameter of the packing material will help to adjust the pressure drop in the continuous chromatographic process and the efficiency of the packing material.

In a further aspect of the present invention, the mobile phase an organic solvent selected from the group consisting of C₁-C₁₀ alkanes, including hexane and heptane; alcohols (C₁-C₆) such as methanol, ethanol, propanol, isopropanol, butanol; acetates and propionates of these alcohols; ketones (C₁-C₁₀) such as acetone, butanone, isopropyl-methylketone; ethers (C₁-C₁₀) such as diethyl ether, diisopropyl ether, tertbutylmethyl ether, tetrahydrofuran, dioxane; halogenated hydrocarbons (C₁-C₁₀) such as methylene chloride, chloroform, chlorobenzene, fluorinated alkanes; trifluoroacetic acid; dimethylformamide; dimethylacetamide; and acetonitrile, and combinations therein. In certain aspects, the mobile phase is a polar solvent, preferably a C₁-C₆ alcohol, and more preferably is methanol.

In other aspects, any of the solvents listed above can be combined to produce the desired chromatographic separations. In particular, the primary solvent can be a C₁-C₆ alcohol, and more preferably is methanol. The secondary solvent can be a C₁-C₆ alcohol, and in particular, can be ethanol or isopropanol. Thus, certain eluent mixtures can include methanol/isopropanol wherein the eluent preferably contains at least 50% by volume of methanol. Alternatively the eluent may contain at least 60%, 70%, 80%, or 90% by volume of methanol.

A feature of the present invention is the adjustment of the chromatographic conditions to obtain the desired enantiomer of modafinil (preferably armodafinil) in at least 95% enantiomeric excess. Alternatively, the desired enantiomer of modafinil (preferably armodafinil) is recovered in at least 96%, 97%, 98%, 99% enantiomeric excess, and preferably in greater than 98 or 99% enantiomeric excess.

Another feature of the present invention provides for adjusting or modifying the chromatographic conditions to obtain the desired enantiomer (preferably armodafinil) in at least 90% yield. Alternatively, the desired enantiomer of modafinil (preferably armodafinil) is recovered in at least a 91%, 92%, 93%, 94%, 95%, 96%, 97%, 98% or 99% yield, and preferably greater than a 90 or 95% yield.

### Examples

The following examples show representative parameters for the isolation of the levorotatory enantiomer of modafinil. Other column configurations can be utilized for the chiral separations described herein, including but not limited to 1.3 / 2.3 / 1.6 / 0.8; or 1 / 2.45 / 1.85 / 0.7.

### Examples 1-4:

| **1 kg Scale** | |
|---|---|
| Column | Chiralpak AD |
| Mobile Phase | methanol |
| Column Length | 9.7 cm avg |
| Column I.D. | 2.5 cm |
| No. of Columns | 6 |
| Column Configuration | 1.2 / 2.3 / 1.7 / 0.8 |
| Feed Concentration | 18 g/l |
| Temperature | 25 °C |

| **Parameters** | **Example 1** | **Example 2** | **Example 3** | **Example 4** |
|---|---|---|---|---|
| Recycling Flow Rate (ml/min) | 109.5 | 108.8 | 114 | 114 |
| Extract Flow Rate (ml/min) | 32.33 | 34.52 | 38.8 | 37.2 |
| Feed Flow rate (ml/min) | 2.83 | 5.12 | 7 | 7 |
| Raffinate Flow Rate (ml/min) | 9.5 | 13.4 | 12.7 | 13.3 |
| Switch Time (min) | 0.7 | 0.73 | 0.7 | 0.7 |
| Eluent Flow Rate (ml/min | 39 | 42.8 | 44.5 | 43.5 |
| | | | | |
| Purity of armodafinil | 99.9% | 99.3% | 99.9% | 99.4% |
| Yield of armodafinil | 93% | >96% | 93.4% | 97.4% |
| Specific Productivity (kg armodafinil/kg CSP/day | 0.19 | 0.36 | 0.48 | 0.49 |

### Examples 5-6:

| **500 kg Scale** | |
|---|---|
| Column: | Chiralpak AD |
| Mobile Phase | methanol |
| Column Length | columns 1-5: 10 cm; |
| | column 6: 7.1 cm |
| No. of Columns | 6 |
| Column Configuration | 1.2 / 2.3 / 1.7 / 0.8 |
| Feed Concentration | 18 (g/l) |
| Temperature: | 25 °C |

| **Parameters** | **Example 5** | **Example 6** |
|---|---|---|
| Column I.D. (cm) | 202 | 300 |
| Recycling Flow Rate (l/h) | 438 | 986 |
| Extract Flow Rate (l/h) | 153 | 344 |
| Feed Flow rate (l/h) | 26.9 | 60.5 |
| Raffinate Flow Rate (l/h) | 44.9 | 101 |
| Switch Time (min) | 0.7 | 0.7 |
| Eluent ( (I/h) | 171 | 384.5 |
| | | |
| Purity of armodafinil | >99% | ≥ 99% |
| Yield of armodafinil | 93% | ≥ 90% |
| Amt of CSP (kg) | 11 | 25.5 |
| | | |
| Specific Productivity (kg armodafinil/kg CSP/day | 0.49 | ≥0.46 |

## Claims

1. A method of obtaining an enantiomer of modafinil comprising the steps of:
a) forming a solution of racemic modafinil; and
b) separating the enantiomers of modafinil by continuous chromatography to obtain at least one of the enantiomers.

2. The method of claim 1 wherein the levorotatory isomer of modafinil is obtained.

3. The method of claim 1 wherein the chromatographic method is simulated moving bed chromatography.

4. The method of claim 1 wherein the chromatographic method is multicolumn non-steady state continuous chromatography.

5. The method of claims 3 or 4 further comprising a chiral stationary phase selected from cellulose tris 4-methylbenzoate; cellulose tricinnamate; amylose tris [(S)-α-methyl benzylcarbamate]; and amylose tris (3,5-dimethylphenyl) carbamate.

6. The method of claim 5 wherein the chiral stationary phase is amylose tris (3,5-dimethylphenyl) carbamate.

7. The method of claims 3 or 4 further comprising a solvent selected from the group consisting of C₁-C₁₀ alkanes, C₁-C₆ alcohols, acetates and propionates of the alcohols, C₁-C₁₀ ketones, C₁-C₁₀ ethers, halogenated C₁-C₁₀ hydrocarbons, trifluoroacetic acid, dimethylformamide, dimethylacetamide, acetonitrile and combinations therein.

8. The method of claim 7 wherein the solvent is selected from a group consisting of hexane, heptane, methanol, ethanol, propanol, isopropanol, butanol, methyl acetate, ethyl acetate, propyl acetate, isopropyl acetate, butyl acetate, methyl propionate, ethyl propionate, propyl propionate, isopropyl propionate, acetone, butanone, isopropyl methylketone, diethyl ether, diisopropyl ether, tertbutylmethyl ether, tetrahydrofuran, dioxane, methylene chloride, chloroform, chlorobenzene, trifluoroacetic acid, dimethylformamide, dimethylacetamide, acetonitrile and combinations therein.

9. The method of claim 8 wherein the solvent is methanol.

10. The method of claim 8 wherein the solvent is a mixture of methanol and isopropanol.

11. The method of claim 2 further comprising a solvent selected from methanol or isopropanol, or a mixture thereof, and further comprising a chiral stationary phase selected from cellulose tris 4-methylbenzoate; cellulose tricinnamate; amylose tris [(S)-α-methyl benzylcarbamate]; and amylose tris (3,5-dimethylphenyl) carbamate.

12. The method of claim 11 wherein the solvent is methanol and the chiral stationary phase is amylose tris (3,5-dimethylphenyl) carbamate.

13. The method of claims 2 or 12 wherein the levorotatory enantiomer of modafinil is recovered in at least 95% enantiomeric excess.

14. The method of claim 13 wherein the levorotatory enantiomer of modafinil is recovered in at least 98% enantiomeric excess.

15. The method of claim 14 wherein the levorotatory enantiomer of modafinil is recovered in at least 99% enantiomeric excess.

16. The method of claims 2 or 12 wherein the levorotatory enantiomer of modafinil is recovered in at least a 90% yield.

17. The method of claim 16 wherein the levorotatory enantiomer of modafinil is recovered in at least a 93% yield.

18. A method for chromatographically resolving at least one enantiomer from a racemic mixture of modafinil using multicolumn continuous chromatography, the continuous chromatography comprising a liquid mobile phase comprising a least one solvent and a solid chiral stationary phase comprising a derivatized polysaccharide that is selected from the amylosic, cellulosic, chitosan, xylan, curdlan, dextran, and inulan class of polysaccharides.

19. The method of claim 18 wherein the resolved enantiomer is the levorotatory isomer of modafinil.

20. The method of claim 18 wherein the continuous chromatographic method is multicolumn non-steady state continuous chromatography.

21. The method of claim 18 wherein the solvent is selected from methanol or isopropanol, or a mixture thereof, and wherein the chiral stationary phase is selected from cellulose tris 4-methylbenzoate; cellulose tricinnamate; amylose tris [(S)-α-methyl benzylcarbamate]; and amylose tris (3,5-dimethylphenyl) carbamate.

22. The method of claim 21 wherein the solvent is methanol and the chiral stationary phase is amylose tris (3,5-dimethylphenyl) carbamate.

23. The method of claims 18 or 22 wherein the levorotatory enantiomer of modafinil is recovered in at least 95% enantiomeric excess.

24. The method of claim 23 wherein the levorotatory enantiomer of modafinil is recovered in at least 98% enantiomeric excess.

25. The method of claim 24 wherein the levorotatory enantiomer of modafinil is recovered in at least 99% enantiomeric excess.

26. The method of claims 18 or 22 wherein the levorotatory enantiomer of modafinil is recovered in at least a 90% yield.

27. The method of claim 26 wherein the levorotatory enantiomer of modafinil is recovered in at least a 93% yield.

## Patentansprüche

1. Verfahren zum Erhalten eines Enantiomers von Modafinil, umfassend die Schritte:
a) das Bilden einer Lösung von racemischem Modafinil, und
b) das Auftrennen der Enantiomere von Modafinil durch kontinuierliche Chromatographie, um mindestens eines der Enantiomere zu erhalten.

2. Verfahren nach Anspruch 1, wobei das linksdrehende Isomer von Modafinil erhalten wird.

3. Verfahren nach Anspruch 1, wobei das chromatographische Verfahren eine simulierte Fließbettchromatographie ist.

4. Verfahren nach Anspruch 1, wobei das chromatographische Verfahren eine kontinuierliche Multisäulen-nicht-Stationärzustandschromatographie ist.

5. Verfahren nach den Ansprüchen 3 oder 4, weiter umfassend eine chirale stationäre Phase, ausgewählt aus Cellulosetris-4-methylbenzoat, Cellulosetricinnamat, Amylosetris[(S)-α-methylbenzylcarbamat] und Amylosetris(3,5-dimethyl-phenyl)carbamate.

6. Verfahren nach Anspruch 5, wobei die chirale stationäre Phase Amylose-tris(3,5-dimethylphenyl)carbamat ist.

7. Verfahren nach den Ansprüchen 3 oder 4, weiter umfassend ein Lösungsmittel, ausgewählt aus der Gruppe, bestehend aus C₁-C₁₀-Alkanen, C₁-C₆-Alkoholen, Acetaten und Propionaten von den Alkoholen, C₁-C₁₀-Ketonen, C₁-C₁₀-Ethern, halogenierten C₁-C₁₀-Kohlenwasserstoffen, Trifluoressigsäure, Dimethylformamid, Dimethylacetamid, Acetonitril und Kombinationen davon.

8. Verfahren nach Anspruch 7, wobei das Lösungsmittel aus einer Gruppe, bestehend aus Hexan, Heptan, Methanol, Ethanol, Propanol, Isopropanol, Butanol, Methylacetat, Ethylacetat, Propylacetat, Isopropylacetat, Butylacetat, Methylpropionat, Ethylpropionat, Propylpropionat, Isopropylpropionat, Aceton, Butanon, Isopropylmethylketon, Diethylether, Diisopropylether, tert-Butylmethylether, Tetrahydrofuran, Dioxan, Methylenchlorid, Chloroform, Chlorbenzol, Trifluoressigsäure, Dimethylformamid, Dimethylacetamid, Acetonitril und Kombinationen davon, ausgewählt ist.

9. Verfahren nach Anspruch 8, wobei das Lösungsmittel Methanol ist.

10. Verfahren nach Anspruch 8, wobei das Lösungsmittel ein Gemisch aus Methanol und Isopropanol ist.

11. Verfahren nach Anspruch 2, weiter umfassend ein Lösungsmittel, ausgewählt aus Methanol oder Isopropanol, oder ein Gemisch davon, und weiter umfassend eine chirale stationäre Phase, ausgewählt aus Cellulosetris-4-methylbenzoat, Cellulosetricinnamat, Amylosetris[(S)-α-methylbenzylcarbamat] und Amylosetris(3,5-dimethylphenyl)carbamat.

12. Verfahren nach Anspruch 11, wobei das Lösungsmittel Methanol ist, und die chirale stationäre Phase Amylosetris(3,5-dimethylphenyl)carbamat ist.

13. Verfahren nach den Ansprüchen 2 oder 12, wobei das linksdrehende Enantiomer von Modafinil in einem Enantiomerenüberschuß von mindestens 95% gewonnen wird.

14. Verfahren nach Anspruch 13, wobei das linksdrehende Enantiomer von Modafinil in einem Enantiomerenüberschuß von mindestens 98% gewonnen wird.

15. Verfahren nach Anspruch 14, wobei das linksdrehende Enantiomer von Modafinil in einem Enantiomerenüberschuß von mindestens 99% gewonnen wird.

16. Verfahren nach den Ansprüchen 2 oder 12, wobei das linksdrehende Enantiomer von Modafinil in einer Ausbeute von mindestens 90% gewonnen wird.

17. Verfahren nach Anspruch 16, wobei das linksdrehende Enantiomer von Modafinil in einer Ausbeute von mindestens 93% gewonnen wird.

18. Verfahren zum chromatographischen Auftrennen mindestens eines Enantiomers aus einem racemischen Gemisch von Modafinil unter Verwendung von kontinuierlicher Multisäulenchromatographie, wobei die kontinuierliche Chromatographie eine flüssige mobile Phase, umfassend mindestens ein Lösungsmittel, und eine feste chirale stationäre Phase, umfassend ein derivatisiertes Polysaccharid, das aus der Amylose-, Cellulose-, Chitosan-, Xylan-, Curdlan-, Dextran- und Inulanklasse von Polysacchariden ausgewählt ist, umfaßt.

19. Verfahren nach Anspruch 18, wobei das abgetrennte Enantiomer das linksdrehende Isomer von Modafinil ist.

20. Verfahren nach Anspruch 18, wobei das kontinuierliche chromatographische Verfahren eine kontinuierliche Multisäulen-nicht-Stationärzustandschromatographie ist.

21. Verfahren nach Anspruch 18, wobei das Lösungsmittel aus Methanol oder Isopropanol, oder einem Gemisch davon, ausgewählt ist, und wobei die chirale stationäre Phase aus Cellulosetris-4-methylbenzoat, Cellulosetricinnamat, Amylosetris[(S)-α-methylbenzylcarbamat] und Amylosetris(3,5-dimethylphenyl)carbamat ausgewählt ist.

22. Verfahren nach Anspruch 21, wobei das Lösungsmittel Methanol ist, und die chirale stationäre Phase Amylosetris(3,5-dimethylphenyl)carbamat ist.

23. Verfahren nach den Ansprüchen 18 oder 22, wobei das linksdrehende Enantiomer von Modafinil in einem Enantiomerenüberschuß von mindestens 95% gewonnen wird.

24. Verfahren nach Anspruch 23, wobei das linksdrehende Enantiomer von Modafinil in einem Enantiomerenüberschuß von mindestens 98% gewonnen wird.

25. Verfahren nach Anspruch 24, wobei das linksdrehende Enantiomer von Modafinil in einem Enantiomerenüberschuß von mindestens 99% gewonnen wird.

26. Verfahren nach den Ansprüchen 18 oder 22, wobei das linksdrehende Enantiomer von Modafinil in einer Ausbeute von mindestens 90% gewonnen wird.

27. Verfahren nach Anspruch 26, wobei das linksdrehende Enantiomer von Modafinil in einer Ausbeute von mindestens 93% gewonnen wird.

## Revendications

1. Procédé d'obtention d'un énantiomère de modafinil comprenant les étapes de :
a) formation d'une solution de modafinil racémique ; et
b) séparation des énantiomères de modafinil par chromatographie continue, pour obtenir au moins l'un des énantiomères.

2. Procédé selon la revendication 1, dans lequel l'isomère lévogyre de modafinil est obtenu.

3. Procédé selon la revendication 1, dans lequel le procédé chromatographique est une chromatographie à lit mobile simulé.

4. Procédé selon la revendication 1, dans lequel le procédé chromatographique est une chromatographie continue en régime transitoire multicolonne.

5. Procédé selon la revendication 3 ou 4, comprenant en outre une phase stationnaire chirale choisie parmi le tris-4-méthylbenzoate de cellulose, le tricinnamate de cellulose, le tris-[(S)-α-méthylbenzylcarbamate] d'amylose et le tris-(3,5-diméthylphényl)carbamate d'amylose.

6. Procédé selon la revendication 5, dans lequel la phase stationnaire chirale est le tris-(3,5-diméthylphényl)carbamate d'amylose.

7. Procédé selon la revendication 3 ou 4, comprenant en outre un solvant choisi dans le groupe constitué par des alcanes en C₁ à C₁₀, des alcools en C₁ à C₆, des acétates et des propionates des alcools, des cétones en C₁ à C₁₀, des éthers en C₁ à C₁₀, des hydrocarbures en C₁ à C₁₀ halogénés, l'acide trifluoroacétique, le diméthylformamide, le diméthylacétamide, l'acétonitrile et des combinaisons de ceux-ci.

8. Procédé selon la revendication 7, dans lequel le solvant est choisi dans le groupe constitué par l'hexane, l'heptane, le méthanol, l'éthanol, le propanol, l'isopropanol, le butanol, l'acétate de méthyle, l'acétate d'éthyle, l'acétate de propyle, l'acétate d'isopropyle, l'acétate de butyle, le propionate de méthyle, le propionate d'éthyle, le propionate de propyle, le propionate d'isopropyle, l'acétone, la butanone, l'isopropylméthylcétone, l'éther diéthylique, l'éther diisopropylique, l'éther tertiobutylméthylique, le tétrahydrofurane, le dioxane, le chlorure de méthylène, le chloroforme, le chlorobenzène, l'acide trifluoroacétique, le diméthylformamide, le diméthylacétamide, l'acétonitrile et des combinaisons de ceux-ci.

9. Procédé selon la revendication 8, dans lequel le solvant est le méthanol.

10. Procédé selon la revendication 8, dans lequel le solvant est un mélange de méthanol et d'isopropanol.

11. Procédé selon la revendication 2, comprenant en outre un solvant choisi parmi le méthanol ou l'isopropanol, ou un mélange des deux, et comprenant en outre une phase stationnaire chirale choisie parmi le tris-4-méthylbenzoate de cellulose, le tricinnamate de cellulose, le tris-[(S)-α-méthyl-benzylcarbamate] d'amylose et le tris-(3,5-diméthylphényl)carbamate d'amylose.

12. Procédé selon la revendication 11, dans lequel le solvant est le méthanol et la phase stationnaire chirale est le tris-(3,5-diméthylphényl)carbamate d'amylose.

13. Procédé selon la revendication 2 ou 12, dans lequel l'énantiomère lévogyre de modafinil est récupéré avec un excès énantiomérique d'au moins 95 %.

14. Procédé selon la revendication 13, dans lequel l'énantiomère lévogyre de modafinil est récupéré avec un excès énantiomérique d'au moins 98 %.

15. Procédé selon la revendication 14, dans lequel l'énantiomère lévogyre de modafinil est récupéré avec un excès énantiomérique d'au moins 99%.

16. Procédé selon la revendication 2 ou 12, dans lequel l'énantiomère lévogyre de modafinil est récupéré avec un rendement d'au moins 90 %.

17. Procédé selon la revendication 16, dans lequel l'énantiomère lévogyre de modafinil est récupéré avec un rendement d'au moins 93 %.

18. Procédé de séparation par chromatographie d'au moins un énantiomère à partir d'un mélange racémique de modafinil au moyen d'une chromatographie continue multicolonne, la chromatographie continue comprenant une phase mobile liquide comprenant au moins un solvant et une phase stationnaire chirale solide comprenant un polysaccharide dérivé qui est choisi dans la classe des polysaccharides de type amylose, cellulose, chitosane, xylane, curdlane, dextrane et inulane.

19. Procédé selon la revendication 18, dans lequel l'énantiomère séparé est l'isomère lévogyre de modafinil.

20. Procédé selon la revendication 18, dans lequel le procédé chromatographique continu est une chromatographie continue en régime transitoire multicolonne.

21. Procédé selon la revendication 18, dans lequel le solvant est choisi parmi le méthanol ou l'isopropanol, ou un mélange des deux, et dans lequel la phase stationnaire chirale est choisie parmi le tris-4-méthylbenzoate de cellulose, le tricinnamate de cellulose, le tris-[(S)-α-méthyl-benzylcarbamate] d'amylose et le tris-(3,5-diméthylphényl)carbamate d'amylose.

22. Procédé selon la revendication 21, dans lequel le solvant est le méthanol et la phase stationnaire chirale est le tris-(3,5-diméthylphényl)carbamate d'amylose.

23. Procédé selon la revendication 18 ou 22, dans lequel l'énantiomère lévogyre de modafinil est récupéré avec un excès énantiomérique d'au moins 95 %.

24. Procédé selon la revendication 23, dans lequel l'énantiomère lévogyre de modafinil est récupéré avec un excès énantiomérique d'au moins 98 %.

25. Procédé selon la revendication 24, dans lequel l'énantiomère lévogyre de modafinil est récupéré avec un excès énantiomérique d'au moins 99 %.

26. Procédé selon la revendication 18 ou 22, dans lequel l'énantiomère lévogyre de modafinil est récupéré avec un rendement d'au moins 90 %.

27. Procédé selon la revendication 26, dans lequel l'énantiomère lévogyre de modafinil est récupéré avec un rendement d'au moins 93 %.
